(19) Europäisches Patentamt European Patent Office Office européen des brevets

(11) **EP 3 139 471 A1**

(12) **EUROPEAN PATENT APPLICATION**

(43) Date of publication:
08.03.2017 Bulletin 2017/10

(51) Int Cl.:
**H02K 1/27** (2006.01)  **H02K 15/03** (2006.01)
**H02K 29/03** (2006.01)

(21) Application number: **16186836.9**

(22) Date of filing: **01.09.2016**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(30) Priority: **07.09.2015  JP 2015175970**<br><br>(71) Applicant: **JTEKT Corporation<br>Chuo-ku, Osaka-shi<br>Osaka 542-8502 (JP)** | (72) Inventors:<br>• **KANDA, Naotake**<br>**Osaka-shi, Osaka 542-0081 (JP)**<br>• **SHIBATA, Yoshiyuki**<br>**Osaka-shi, Osaka 542-0081 (JP)**<br>• **OONO, Yoshihiro**<br>**Osaka-shi, Osaka 542-0081 (JP)**<br><br>(74) Representative: **Winter, Brandl, Fürniss, Hübner, Röss, Kaiser, Polte - Partnerschaft mbB<br>Patent- und Rechtsanwaltskanzlei<br>Alois-Steinecker-Strasse 22<br>85354 Freising (DE)** |

(54) **INTERIOR PERMANENT MAGNET ROTOR AND METHOD FOR MANUFACTURING THE SAME**

(57)    An interior permanent magnet rotor restrains demagnetization of permanent magnets embedded in a core 12. Each permanent magnet is formed by joining a first portion 16a and a second portion 16b at a connection CS. The first and second portions 16a, 16b extend from the outer side toward the inner side in the radial direction of the core 12. The outer end faces ES of the first and second portions 16a, 16b in the radial direction of the core 12 extend in an orientation direction MO as viewed in section perpendicular to the axial direction Da. The outside diameter of the core 12 gradually increases from the boundaries BL between a single magnetic pole and magnetic poles adjoining the single magnetic pole toward the middle of the single magnetic pole in the circumferential direction of the core 12.

FIG.3

EP 3 139 471 A1

**Description**

BACKGROUND OF THE INVENTION

1. Field of the Invention

The present invention relates to interior permanent magnet rotors having permanent magnets embedded in a core and methods for manufacturing the same.

2. Description of the Related Art

For example, United States Patent Application Publication No. 2015/0137629 describes a rotor including permanent magnets extending from the outer side toward the inner side in the radial direction of a core.

In one possible manufacturing process of this rotor, insertion holes are formed in the core, and a magnetic field is applied from the outside of the core in the radial direction to a material of the permanent magnets (magnet material) filling the insertion holes. In this case, a magnetic path in the magnet material may decrease in the outer ends of the magnet material in the radial direction of the core. If the magnetic path in the magnet material decreases in the outer ends of the magnet material in the radial direction of the core, the permanent magnets have a shorter length in the orientation direction in their outer ends in the radial direction of the core. When an electric motor is driven, the outer parts of the permanent magnets in the radial direction of the core tend to be subjected to a reverse magnetic field opposite to that of the magnetic flux of the permanent magnets. When subjected to the reverse magnetic field, the permanent magnets are more likely to be demagnetized as their length in the orientation direction is shorter. Accordingly, in the case where the permanent magnets have a shorter length in the orientation direction in their ends in the radial direction of the core as described above, the permanent magnets tend to be demagnetized while the rotor is in use.

SUMMARY OF THE INVENTION

It is one object of the present invention to provide an interior permanent magnet rotor that can restrain demagnetization of permanent magnets embedded in a core, and a method for manufacturing the same.

According to one aspect of the present invention, an interior permanent magnet rotor includes: a core made of a soft magnetic material; and a permanent magnet embedded in the core. The permanent magnet includes a first portion and a second portion each extending from an outer side toward an inner side in a radial direction of the core. The first portion and the second portion adjoin each other. The first portion and the second portion form a single magnetic pole. An orientation direction in outer ends of the first and second portions of the single magnetic pole in the radial direction of the core is such a direction that goes further away from a center of the core toward a middle of the single magnetic pole in a circumferential direction of the core. Outermost end faces of the first and second portions in the radial direction of the core extend in the orientation direction of the permanent magnet as viewed in section perpendicular to an axial direction of the core.

If the permanent magnet is shaped such that the end faces of the first and second portions are not parallel to the orientation direction as viewed in section perpendicular to the axial direction of the core, the length of the permanent magnet in the orientation direction decreases near the end faces of the first and second portions. Demagnetization tends to occur if the length in the orientation direction is short. However, if the permanent magnet is shaped such that the end faces of the first and second portions are close to parallel to the orientation direction as viewed in section perpendicular to the axial direction of the core, the length of the permanent magnet in the orientation direction does not excessively decrease even near the end faces of the first and second portions as compared to the parts of the permanent magnet which are located slightly away from the end faces of the first and second portions. In the above configuration, the outer end faces of the permanent magnet in the radial direction of the core extend in the orientation direction of the permanent magnet as viewed in section perpendicular to the axial direction of the core. This can restrain demagnetization of the permanent magnet embedded in the core.

In the interior permanent magnet rotor of the above aspect, an outside diameter of the core may gradually increase from portions of the core which face the outermost end faces of the first and second portions in the radial direction of the core toward the middle of the single magnetic pole in the circumferential direction of the core.

In the above configuration, the orientation direction in the outer ends of the first and second portions of the single magnetic pole in the radial direction of the core is such a direction that goes further away from the center of the core toward the middle of the single magnetic pole in the circumferential direction of the core. The outer end faces of the first and second portions in the radial direction of the core therefore extend further away from the center of the core toward the middle of the single magnetic pole in the circumferential direction of the core, as viewed in section perpendicular to the axial direction of the core. If the outer diameter of the core is constant, the distance between each of the outer end faces of the first and second portions in the radial direction of the core and the outer periphery of the core increases as further away from the middle of the single magnetic pole in the circumferential direction of the core. In each of the first and second portions, a pair of opposite surfaces in the circumferential direction of the core have different polarities from each other. The portions of the core which face the outermost end faces of the first and second portions form short circuit paths connecting one of the pair of surfaces which forms the magnetic pole, namely the surface located near the middle of the magnetic pole in the circumferential direction of the core, to the other surface without passing through a stator. The amount of magnetic flux in the short circuit paths increases as the distance between each of the outer end faces of the first and second portions in the radial direction of the core and the outer periphery of the core increases, namely as the width of a path serving as a magnetic path for leakage flux increases.

In the above configuration, the outside diameter of the core gradually increases from the portions of the core which face the outermost end faces of the first and second portions in the radial direction of the core toward the middle of the single magnetic pole in the circumferential direction of the core. This can suppress the distance between each of the outer ends of the first and second portions in the radial direction of the core and the outer periphery of the core from increasing partially, and can reduce the amount of magnetic flux in the short circuit paths.

In the interior permanent magnet rotor of the above aspect, the outside diameter of the core may gradually increase from boundaries between the single magnetic pole and magnetic poles adjoining the single magnetic pole on both sides toward the middle of the single magnetic pole in the circumferential direction of the core.

In the above configuration, the outside diameter of the core gradually increases from the boundaries between the single magnetic pole and the magnetic poles adjoining the single magnetic pole on both sides toward the middle of the single magnetic pole in the circumferential direction of the core. This makes it easy to collect magnetic flux leaving the first portion and the second portion and magnetic flux entering the first portion and the second portion in the middle part of the single magnetic pole in the core. It is therefore easy to produce magnetic flux with a fundamental waveform having a maximum value of magnetic flux density in the middle part of the magnetic pole, and space harmonics of the magnetic flux can be reduced.

In the interior permanent magnet rotor of the above aspect, a length of the permanent magnet in the orientation direction may be shorter on the inner side in the radial direction of the core than on the outer side in the radial direction of the core. In the above configuration, since the length of the permanent magnet in the orientation direction is shorter on the inner side in the radial direction of the core than on the outer side in the radial direction of the core, the surface area of the permanent magnet can be increased, and the magnetic flux of the permanent magnet can be easily increased. In the case where the permanent magnet is produced by applying a magnetic field to a magnet material after filling the core with the magnet material, a magnetic path passing through the magnet material on the inner side in the radial direction of the core tends to have higher magnetic resistance than a magnetic path passing through the magnet material on the outer side in the radial direction of the core, if the permanent magnet has a constant length in the orientation direction. In this case, the amount of magnetic flux passing through the magnet material on the inner side in the radial direction of the core tends to be small. In the above configuration, however, the length of the permanent magnet in the orientation direction is shorter on the inner side in the radial direction of the core than on the outer side in the radial direction of the core. This can reduce the magnetic resistance in the magnetic path passing through the magnet material on the inner side in the radial direction of the core, and can therefore restrain a decrease in magnetic flux passing through the magnet material on the inner side in the radial direction of the core.

According to another aspect of the invention, a method for manufacturing the interior permanent magnet rotor of the above aspect includes: filling an insertion hole of the core with a magnet material that is a material of the permanent magnet; and orienting/magnetizing by applying a magnetic field to the magnet material in the insertion hole in the radial direction of the core.

In the above configuration, the magnetic field is applied in the radial direction of the core to the magnet material filling the insertion hole of the core. Accordingly, the orientation direction in the outer ends of the first and second portions of the single magnetic pole in the radial direction of the core tends to be such a direction that goes further away from the center of the core toward the middle of the single magnetic pole in the circumferential direction of the core. That is, the orientation direction in the outer ends of the first and second portions of the single magnetic pole in the radial direction of the core tends to be the orientation direction of the permanent magnet in the inner permanent magnet rotor of the above aspect. The inner permanent magnet rotor of the above aspect can restrain a decrease in magnetic flux passing through the magnet material on the inner side in the radial direction of the core by the orienting/magnetizing. Accordingly, an orientation rate and a magnetization rate can be improved, and efficiency of utilization of the permanent magnet can be improved.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a plan view of an interior permanent magnet rotor according to a first embodiment;
FIG. 2 is a plan view illustrating a filling step and an orienting/magnetizing step according to the embodiment;
FIG. 3 is a partial sectional view of the rotor according to the embodiment;
FIG. 4 is a graph showing magnetic flux density distribution according to the embodiment;
FIG. 5 is a diagram showing the shape of a part of a rotor of a comparative example;
FIG. 6 is a graph showing magnetic flux density distribution of the comparative example;
FIG. 7 is a partial enlarged view of a rotor according to a second embodiment;
FIG. 8 is a diagram showing an example of the shape of a permanent magnet that can improve the magnetization rate and the orientation rate;
FIG. 9 is a graph showing the thickness of the permanent magnet;
FIG. 10 is a diagram showing another example of the shape of a permanent magnet that can improve the magnetization rate and the orientation rate; and
FIG. 11 is a graph showing the thickness of the permanent magnet.

## DETAILED DESCRIPTION OF EMBODIMENTS

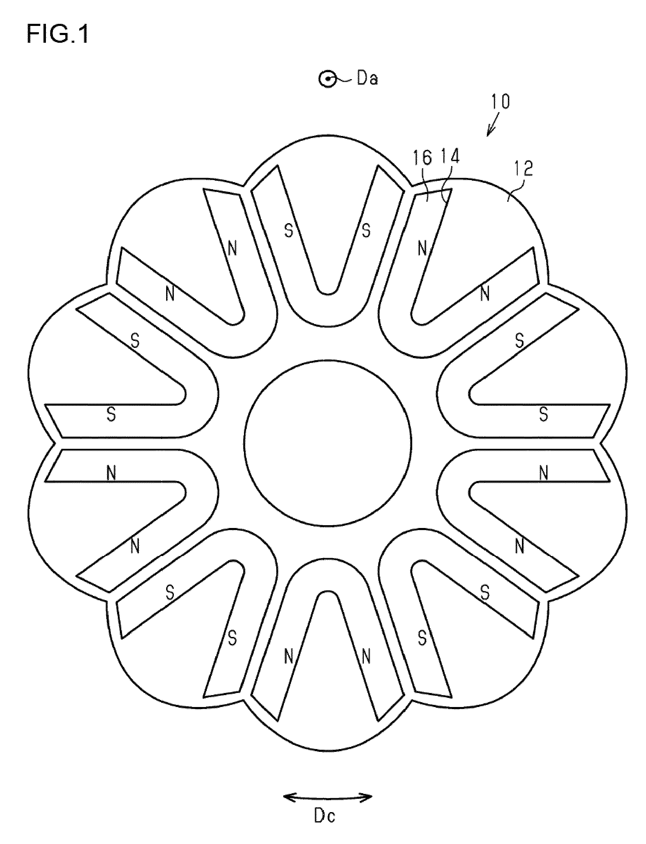

A first embodiment of an interior permanent magnet rotor will be described with reference to the accompanying drawings. A rotor 10 shown in FIG. 1 is contained in an interior permanent magnet synchronous motor (IPMSM). The IPMSM forms an electric power steering system (EPS). The rotor 10 includes a core 12 and permanent magnets 16. The core 12 is made of a soft magnetic material. The core 12 is formed by stacking a plurality of electrical steel sheets that are silicon steel sheets, and has a function as a magnetic circuit and a function to hold the permanent magnets 16 and to generate and transmit rotational torque. The core 12 has 10 insertion holes 14. The insertion holes 14 extend through the core 12 in the axial direction Da of the core 12. Each insertion hole 14 has a substantially U-shape in section perpendicular to the axial direction Da. The insertion holes 14 are disposed evenly in the circumferential direction Dc of the core 12. The core 12 has the permanent magnets 16 embedded in the insertion holes 14. A mixture of magnetic particles and resin is used as a magnet material for the permanent magnets 16. The permanent magnets 16 are produced by magnetizing the magnet material. The outer periphery of the rotor 10 has such a sectional shape as shown in FIG. 1 at any position in the axial direction Da.

In the present embodiment, the permanent magnets 16 are produced by filling the insertion holes 14 with the magnet material by injection molding using the core 12 as a mold, and applying a magnetic field to the magnet material in the insertion holes 14.

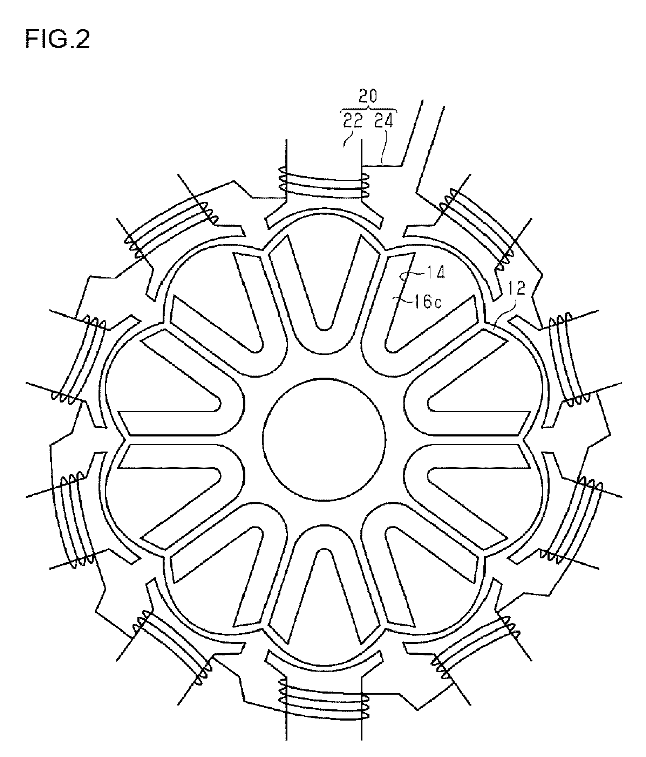

FIG. 2 illustrates the step of filling the insertion holes 14 with the magnet material and the step of orienting and magnetizing the magnet material according to the present embodiment. In the present embodiment, a magnetic field is applied in the radial direction of the core 12 by a magnetizing device 20 while the insertion holes 14 are being filled with a magnet material 16c. Namely, in the present embodiment, the filling step and the orienting/magnetizing step overlap each other on the time axis. A magnetic field is therefore sequentially applied to the magnet material 16c having been introduced into the insertion holes 14. The magnetizing device 20 includes the same number of teeth 22 as the number of magnetic poles, and each tooth 22 has a coil 24 wound therearound. A current is applied to the coil 24 to use the teeth 22 as electromagnets.

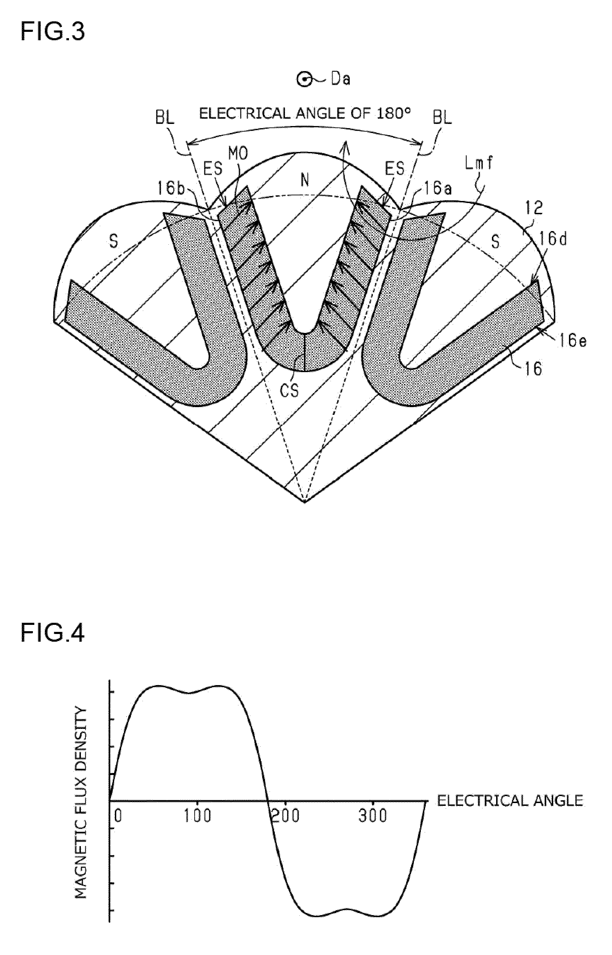

FIG. 3 shows a sectional configuration of a part of the rotor 10 produced by the steps illustrated in FIG. 2. FIG. 3 shows a magnetic path Lmf formed by the orienting/magnetizing step using the magnetizing device 20 in FIG. 2 and passing through the core 12 etc.

As shown in FIG. 3, the permanent magnet 16 forming a single magnetic pole is formed by joining a first portion 16a and a second portion 16b at a connection CS. The first and second portions 16a, 16b extend from the outer side toward the inner side in the radial direction of the core 12, and the connection CS is located on the inner side in the radial direction of the core 12. In the first and second portions 16a, 16b forming a single magnetic pole, magnetic flux passes through the magnetic path Lmf shown in FIG. 3 in the orienting/magnetizing step illustrated in FIG. 2, whereby the magnet material is oriented and magnetized in accordance with the magnetic path Lmf. In FIG. 3, the orientation direction MO is schematically shown by arrows in the first and second portions 16a, 16b. As used herein, the term "orientation" means orienting the easy magnetization directions of the magnetic particles of the permanent magnet 16 in the same direction, and the term "orientation direction" refers to the direction parallel to the magnetic moment of the permanent magnet 16 after magnetization.

In the present embodiment, the outermost end faces ES of the first and second portions 16a, 16b in the radial direction of the core 12 are shaped to extend in the orientation direction MO in section perpendicular to the axial direction Da. The lengths of the first and second portions 16a, 16b in the orientation direction MO are therefore substantially constant even near the end faces ES.

The outside diameter of the core 12 gradually increases from the boundaries BL between a single magnetic pole (N pole in FIG. 3) formed by the first and second portions 16a, 16b and a pair of magnetic poles (S poles in FIG. 3) adjoining the single magnetic pole toward the middle of the single magnetic pole in the circumferential direction of the core 12. In particular, the distance between each of the end faces ES of the first and second portions 16a, 16b and the outer periphery of the core 12 is substantially constant. In FIG. 3, a long dashed double-short dashed line represents a part of a circle having a predetermined radius from the center of the core 12. As shown in FIG. 1, the rotor 10 has the shape of a flower having the same number of petals as the number of magnetic poles (in this example, 10) as viewed in plan.

Functions of the present embodiment will be described. The insertion holes 14 of the core 12 are formed in advance to define the end faces ES of the permanent magnets 16 shown in FIG. 3. As shown in FIG. 2, the insertion holes 14 are filled with the magnet material 16c and a magnetic field is applied to the magnet material 16c in the insertion holes 14 to produce the permanent magnets 16. At this time, the magnetic field is applied to the magnet material 16c along the magnetic path Lmf shown in FIG. 3. The orientation directions MO near the end faces ES of the first and second portions 16a, 16b are therefore the directions along the end faces ES in section perpendicular to the axial direction Da.

The present embodiment has the following effects.

(1) The outermost end faces ES of the first and second portions 16a, 16b in the radial direction of the core 12 are shaped to extend in the orientation direction MO of the permanent magnet 16 in section perpendicular to the axial direction Da. The length of each permanent magnet 16 in the orientation direction MO therefore does not excessively decrease near the end faces ES as compared to the parts of the permanent magnet 16 which are located slightly away from the end faces ES. Accordingly, demagnetization of the permanent magnets 16 embedded in the core 12 can be restrained.

(2) The core 12 is shaped such that the outside diameter of the core 12 gradually increases from the end portions of each magnetic pole in the circumferential direction of the core 12 toward the middle of the magnetic pole in the circumferential direction of the core 12. Accordingly, as opposed to the case where the outer peripheral portions of the core 12 which face the first and second portions 16a, 16b form the outer periphery of a core (rotor) of a single columnar shape, the distance between each of the outer end faces ES of the first and second portions 16a, 16b in the radial direction of the core 12 and the outer periphery of the core 12 does not increase toward the outer side each magnetic pole in the circumferential direction. In the case where the distance between each of the radially outer end faces ES of the first and second portions 16a, 16b and the outer periphery of the core 12 increases toward the outer side each magnetic pole in the circumferential direction, the magnetic flux tends to flow into the portion having a larger distance, which results in an increased amount of magnetic flux flowing in a short circuit path that connects an inner peripheral surface 16d and an outer peripheral surface 16e of each permanent magnet 16 in FIG. 3 without passing through a stator coil.

(3) The outside diameter of the core 12 gradually increases from the boundaries BL between a single magnetic pole and magnetic poles adjoining the single magnetic pole on both sides toward the middle of the single magnetic pole in the circumferential direction of the core 12. This makes it easy to collect the magnetic flux leaving the first portion 16a and the second portion 16b and the magnetic flux entering the first portion 16a and the second portion 16b in the middle part of the single magnetic pole in the core 12. It is therefore easy to produce the magnetic flux with a fundamental waveform having a maximum value of the magnetic flux density in the middle part of the magnetic pole, and space harmonics of the magnetic flux can be reduced.

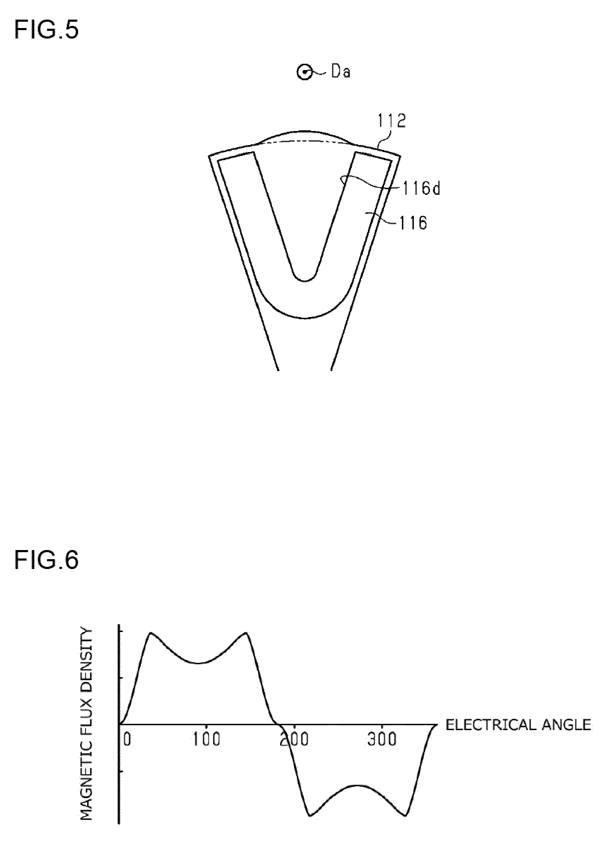

FIG. 4 shows magnetic flux density distribution according to the present embodiment. FIG. 6 shows magnetic flux density distribution of a comparative example shown in FIG. 5. In the comparative example shown in FIG. 5, the outside diameter of a core 112 gradually increases from the portions facing the outer ends of an inner peripheral surface 116d of a permanent magnet 116 in the radial direction of the core 112 toward the middle of the core 112 in the circumferential direction. However, the outer periphery of the core 112 has the shape of an arc of a circle with constant curvature in the portions facing the outer ends of the permanent magnet 116 in the radial direction of the core 112. The distance between each of the outermost end faces of the permanent magnet 116 in the radial direction of the core 112 and the arc is substantially constant as viewed in section perpendicular to the axial direction Da. Namely, the outermost end faces of the permanent magnet 116 in the radial direction of the core 112 do not extend in the orientation direction as viewed in section perpendicular to the axial direction Da. In this case, the magnetic flux density distribution is significantly shifted from the fundamental waveform.

A second embodiment will be described with reference to the drawings. The differences from the first embodiment will be mainly described below.

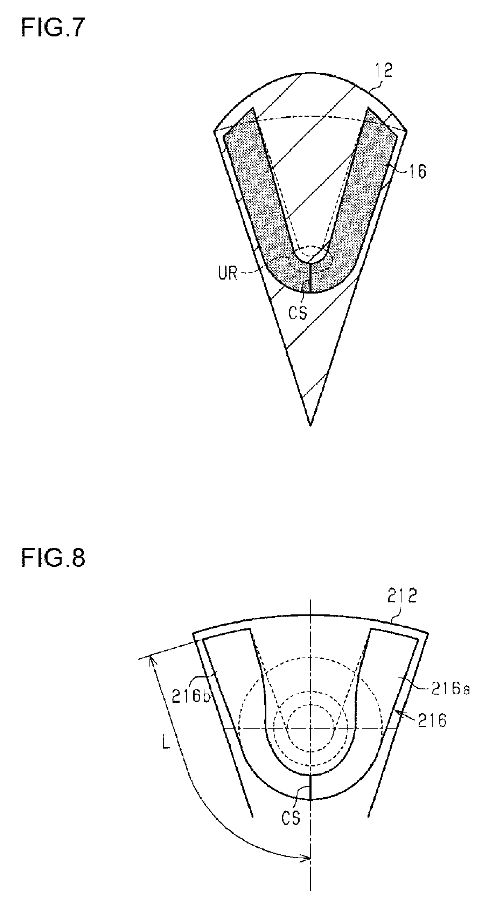

FIG. 7 shows a sectional shape of the permanent magnet 16 according to the present embodiment.

As shown in FIG. 7, the length of the permanent magnet 16 in the orientation direction (the thickness of the permanent magnet 16) of the present embodiment gradually decreases toward the inner side in the radial direction of the core 12 except for a round portion UR near the connection CS. For comparison, the shape of the permanent magnet 16 of the first embodiment is shown by a dashed line in FIG. 7. In other words, the shape of the permanent magnet having a substantially constant length in the orientation direction except for the round portion UR is shown by the dashed line in FIG. 7.

The permanent magnets 16 according to the present embodiment are shaped to improve the orientation rate and the magnetization rate thereof. As used herein, the term "orientation rate" refers to the degree to which the easy magnetization directions are oriented in the direction parallel to the magnetic moment required for the permanent magnet 16. If the orientation rate is low, the magnetic flux flowing from the N pole to the S pole as a result of magnetization has lower density. The term "magnetization rate" refers to the degree to which the magnetic moment (magnetization direction) in a local area (magnetic domain) in the permanent magnet 16 is oriented in one direction. Even if the orientation rate is high, the magnetic flux flowing from the N pole to the S pole of the permanent magnet 16 has lower density if the degree to which the magnetization direction is oriented in one of the pair of easy magnetization direction is low. The present embodiment aims to increase the speed electromotive force coefficient of the IPMSM by increasing not only the magnetization rate but also the orientation rate and thus to increase torque that is generated by the IPMSM when a current of a predetermined magnitude is applied thereto.

In the present embodiment, as in the first embodiment, the insertion holes 14 of the core 12 are filled with the magnet material 16c by injection molding, and a magnetic field is applied to the magnet material 16c in the insertion holes 14 by the magnetizing device 20 shown in FIG. 2. In this case, the magnetic flux is less likely to enter the inner part of the magnet material 16c in the radial direction of the core 12 as compared to the outer part of the magnet material 16c in the radial direction of the core 12. One reason for this is that the magnetic resistance of a magnetic path going from the magnetizing device 20 and returning to the magnetizing device 20 through the inner part of the magnet material 16c in the radial direction of the core 12 is higher than that of a magnetic path going from the magnetizing device 20 and returning to the magnetizing device 20 through the outer part of the magnet material 16c in the radial direction of the core 12. In the case where the permanent magnet 16 has a low orientation rate and a low magnetization rate on the inner side in the radial direction of the core 12, torque that is generated is small for the amount of magnet material 16c used. Namely, the efficiency of utilization of the magnet material 16c is reduced.

In the present embodiment, each permanent magnet 16 is reduced in thickness toward the inner side in the radial direction of the core 12 in order to compensate for the fact that the magnetic resistance of the magnetic path going from the magnetizing device 20 and returning to the magnetizing device 20 through the inner part of the magnet material 16c in the radial direction of the core 12 is higher than that of the magnetic path going from the magnetizing device 20 and returning to the magnetizing device 20 through the outer part of the magnet material 16c in the radial direction of the core 12 due to the former magnetic path being longer than the latter magnetic path. This can be implemented because the magnet material 16c has lower magnetic permeability than the core 12.

The present embodiment has the following effects in addition to the above effects (1) to (3) of the first embodiment.

(4) The thickness of each permanent magnet 16 (length in the orientation direction) is smaller on the inner side in the radial direction of the core 12 than on the outer side in the radial direction of the core 12. This configuration can reduce the magnetic resistance of the magnetic path going from the magnetizing device 20 and returning to the magnetizing device 20 through the inner part of the magnet material 16c in the radial direction of the core 12 and can thus increase the magnetic flux passing through the inner part of the magnet material 16c in the radial direction of the core 12. The orientation rate and the magnetization rate in the inner part of each permanent magnet 16 in the radial direction of the core 12 can therefore be improved.

Since the thickness of each permanent magnet 16 is smaller on the inner side in the radial direction of the core 12 than on the outer side in the radial direction of the core 12, the surface area of the permanent magnet 16 can be increased as compared to the case where the permanent magnet 16 has a constant thickness. The magnetic flux of each permanent magnet 16 can therefore be easily increased.

Reducing the thickness of each permanent magnet 16 on the inner side in the radial direction of the core 12 can reduce the amount of magnet material 16c that is used for a single rotor 10. Reduction in cost can therefore be achieved. Increasing the thickness of each permanent magnet 16 on the outer side in the radial direction of the core 12, namely on the side that tends to be subjected to a reverse magnetic field when the IPMSM is being driven, can restrain demagnetization.

At least one of the matters of the above embodiments may be modified as follows.

Regarding the shape of the permanent magnets, the first portion 16a and the second portion 16b need not necessarily be connected together on the inner side in the radial direction of the core 12. The first portion 16a and the second portion 16b may be separated from each other. In this case, it is desirable to place a member with low magnetic permeability in contact with the inner ends of the first and second portions 16a, 16b in the radial direction of the core 12 to limit the amount of magnetic flux passing through a short circuit path in the inner ends of the first and second portions 16a, 16b in the radial direction of the core 12. The shape of the permanent magnet having the first and second portions 16a, 16b separated from each other is not limited to a bisected U-shape. For example, such a permanent magnet may have a bisected V-shape or a bisected angular U-shape.

The permanent magnets are not limited to those produced by magnetizing a magnet material after filling the core 12 with the magnet material. For example, sintered magnets that have been magnetized in advance may be placed in the core 12. In this case as well, demagnetization can be restrained as long as the outer end faces ES of the first and second portions 16a, 16b of a single magnetic pole in the radial direction of the core 12 extend in the orientation direction as viewed in section perpendicular to the axial direction Da.

Regarding the shape of the core, the core is not limited to the one shaped such that the outside diameter of the core gradually increases from the boundaries BL between adjoining ones of the magnetic poles toward the middle of each magnetic pole in the circumferential direction of the core as shown in FIG. 3. For example, the core may be shaped such that, only in the portions facing the end faces ES of the first and second portions 16a, 16b, the outside diameter of the core gradually increases toward the middle of each magnetic pole in the circumferential direction of the core, and the outside diameter of the core is constant in the portion located between the portions facing the end faces ES of the first and second portions 16a, 16b. The above effects (1), (2) can be obtained in this case.

For example, the core may have a columnar shape, and clearance serving as a flux barrier may be provided between the core and each of the end faces ES of the first and second portions 16a, 16b so that the core does not contact the end faces ES of the first and second portions 16a, 16b.

Regarding the material of the core, the core is not limited to the one formed by electrical steel sheets such as silicon steel sheets. For example, the core may be made of spheroidal graphite cast iron (FCD), soft iron, etc.

Regarding the manufacturing method, the permanent magnets 16 are not limited to those formed by injection molding. For example, the permanent magnets 16 may be formed by compression molding. This can be implemented by introducing resin-coated magnetic particles used as a magnet material into the insertion holes 14 and compressing the magnet material in the insertion holes 14 to fill the insertion holes 14 with the magnet material, and applying a magnetic field in the radial direction of the core 12. In this case as well, since a magnetic field is applied in the radial direction of the core 12, demagnetization tends to occur if the permanent magnets 16 have a shorter length in the orientation direction in their ends in the radial direction of the core 12. It is therefore effective to form the permanent magnets 16 such that the end faces ES of the first and second portions 16a, 16b extend in the orientation direction as viewed in section perpendicular to the axial direction Da.

Regarding the length of the permanent magnets in the orientation direction, the configuration in which the length of each permanent magnet 16 in the orientation direction is smaller on the inner side in the radial direction of the core 12 than on the outer side in the radial direction of the core 12 is not limited to the configuration of the second embodiment (FIG. 7). FIG. 8 shows an example in which a core 212 has a columnar shape and each permanent magnet 216 is shaped such that its outer end faces in the radial direction of the core 212 extend along the outer periphery of the core 212 as in conventional examples. In this example, the magnetization rate and the orientation rate are improved particularly by adjusting the length of each permanent magnet 216 in the orientation direction. In FIG. 8, the magnet thickness t, namely the length of the permanent magnet 216 in the orientation direction at the length x along the outer periphery of the permanent magnet 216 as measured from the connection CS between first and second portions 216a, 216b, is given by the following expression (c1) using the length L along the outer periphery of the permanent magnet 216 from the connection CS and the minimum length in the "orientation direction (minimum thickness c) of the permanent magnet 216.

$$t = c + b/[1 + \exp\{-a \cdot (x + h - L/2)\}] \qquad (c1)$$

Coefficient a and constants b, c are used in the expression (c1). Constant b is set to about the maximum length in the orientation direction (maximum thickness) minus the minimum thickness c.

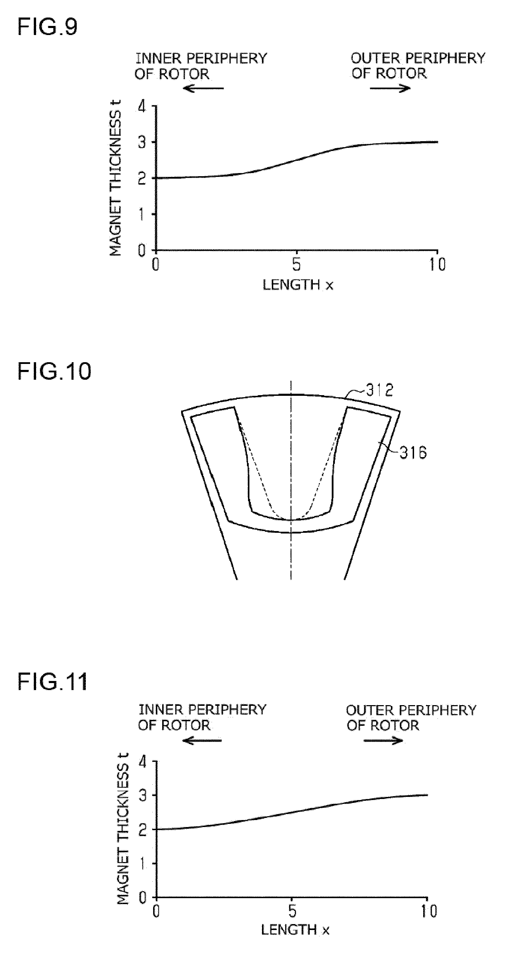

FIG. 9 shows the relationship between the length x along the outer periphery of the permanent magnet 216 and the magnet thickness t as defined by the expression (c1). As shown in FIG. 9, the magnet thickness t transitions from the maximum thickness of about "c + b" to the minimum thickness c. In this case, the length x along the outer periphery of the permanent magnet 216 at which the magnet thickness t becomes equal to an intermediate thickness between the maximum thickness and the minimum thickness can be adjusted by constant h. In FIG. 9, constant h has been adjusted so that the magnet thickness t becomes equal to the intermediate thickness between the maximum thickness and the minimum thickness when the length x along the outer periphery of the permanent magnet 216 is about L/2. If it is desired to increase the magnet thickness t only near the outer periphery of the core 212, constant h is adjusted so that the magnet thickness t becomes equal to the intermediate thickness between the maximum thickness and the minimum thickness at a position near the outer periphery of the core 212.

In the expression (c1), the magnet thickness t converges to "c + b" when the length x is large, and converges to the minimum thickness c when the length x is small. However, if coefficient a is increased, the absolute value of the rate of change from one of a value close to "c" and a value close to "c + b" to the other increases.

The method for improving the magnetization rate and the orientation rate by adjusting the length in the orientation direction of the permanent magnet 216 is not limited to the one using the expression (c1). For example, each permanent magnet may be shaped like a permanent magnet 316 in a core 312 as shown in FIG. 10. FIG. 11 shows the relationship between the length x along the outer periphery of the permanent magnet 316 and the magnet thickness t.

Setting of the magnet thickness t shown in FIGS. 8 and 10 may be applied to the configuration in which the end faces of each permanent magnet extend in the orientation direction as viewed in section perpendicular to the axial direction Da as in the above embodiments. In this case, the core may be shaped as described in the above embodiments or their modifications.

The magnetizing device 20 is not limited to the one using electromagnets. For example, the magnetizing device 20 may use permanent magnets.

The IPMSM is not limited to the one contained in an EPS. For example, the IPMSM may be contained in a variable gear ratio steering system. The IPMSM is not limited to the one contained in an actuator for steering steered wheels.

**Claims**

1. An interior permanent magnet rotor, comprising:

   a core made of a soft magnetic material; and
   a permanent magnet embedded in the core, wherein,
   the permanent magnet includes a first portion and a second portion each extending from an outer side toward an inner side in a radial direction of the core,
   the first portion and the second portion adjoin each other,
   the first portion and the second portion form a single magnetic pole,
   an orientation direction in outer end portions of the first and second portions of the single magnetic pole in the radial direction of the core is such a direction that goes further away from a center of the core toward a middle of the single magnetic pole in a circumferential direction of the core, and
   outermost end faces of the first and second portions in the radial direction of the core extend in the orientation direction of the permanent magnet as viewed in section perpendicular to an axial direction of the core.

2. The interior permanent magnet rotor according to claim 1, wherein,
   an outside diameter of the core gradually increases from portions of the core which face the outermost end faces of the first and second portions in the radial direction of the core toward the middle of the single magnetic pole in the circumferential direction of the core.

3. The interior permanent magnet rotor according to claim 2, wherein,
   the outside diameter of the core gradually increases from boundaries between the single magnetic pole and magnetic poles adjoining the single magnetic pole on both sides toward the middle of the single magnetic pole in the circumferential direction of the core.

4. The interior permanent magnet rotor according to any one of claims 1 to 3, wherein,
   a length of the permanent magnet in the orientation direction is shorter on the inner side in the radial direction of the core than on the outer side in the radial direction of the core.

5. A method for manufacturing the interior permanent magnet rotor according to any one of claims 1 to 4, comprising:

   filling an insertion hole of the core with a magnet material that is a material of the permanent magnet; and
   orienting/magnetizing by applying a magnetic field to the magnet material in the insertion hole in the radial direction of the core.

FIG.1

FIG.2

## FIG.3

## FIG.4

FIG.5

FIG.6

FIG.7

FIG.8

FIG.9

FIG.10

FIG.11

Europäisches
Patentamt

European
Patent Office

Office européen
des brevets

# EUROPEAN SEARCH REPORT

Application Number

EP 16 18 6836

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2013/103118 A1 (AICHI STEEL CORP [JP]) 11 July 2013 (2013-07-11) * paragraphs [0001], [0012], [0013], [0020]; figures 1A - 2B * | 1-5 | INV. H02K1/27 ADD. H02K15/03 H02K29/03 |
| A | JP 2009 005445 A (KURA GIJUTSU KENKYUSHO KK) 8 January 2009 (2009-01-08) * figures 11-13 * | 1-5 | |
| A | JP 2015 133839 A (JTEKT CORP) 23 July 2015 (2015-07-23) * figure 3 * | 1-5 | |
| A,D | US 2015/137629 A1 (CHOWDHURY MAZHARUL H [US] ET AL) 21 May 2015 (2015-05-21) * figures 1, 2 * | 1-5 | |
| A | US 2002/047434 A1 (KOHARAGI HARUO [JP] ET AL) 25 April 2002 (2002-04-25) * paragraph [0026]; figure 4 * | 1-3 | |
| A | US 2013/119811 A1 (KOBAYASHI HIDEKI [JP]) 16 May 2013 (2013-05-16) * paragraph [0022]; figure 2 * | 1-3 | TECHNICAL FIELDS SEARCHED (IPC) H02K |
| A | US 2013/313936 A1 (SHIBATA YOSHIYUKI [JP]) 28 November 2013 (2013-11-28) * paragraph [0033]; figures 2, 6 * | 1,4 | |

The present search report has been drawn up for all claims

| Place of search | Date of completion of the search | Examiner |
|---|---|---|
| The Hague | 19 January 2017 | Georgopoulos, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 18 6836

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2017

| Patent document cited in search report | | Publication date | Patent family member(s) | | Publication date |
|---|---|---|---|---|---|
| WO 2013103118 | A1 | 11-07-2013 | JP | 2013143791 A | 22-07-2013 |
| | | | WO | 2013103118 A1 | 11-07-2013 |
| JP 2009005445 | A | 08-01-2009 | NONE | | |
| JP 2015133839 | A | 23-07-2015 | NONE | | |
| US 2015137629 | A1 | 21-05-2015 | CN | 105723594 A | 29-06-2016 |
| | | | EP | 3055921 A1 | 17-08-2016 |
| | | | US | 2015137629 A1 | 21-05-2015 |
| | | | WO | 2015074023 A1 | 21-05-2015 |
| US 2002047434 | A1 | 25-04-2002 | JP | 3787756 B2 | 21-06-2006 |
| | | | JP | 2002078255 A | 15-03-2002 |
| | | | US | 2002047434 A1 | 25-04-2002 |
| US 2013119811 | A1 | 16-05-2013 | CN | 103117609 A | 22-05-2013 |
| | | | EP | 2595282 A2 | 22-05-2013 |
| | | | JP | 5863410 B2 | 16-02-2016 |
| | | | JP | 2013106494 A | 30-05-2013 |
| | | | KR | 20130054198 A | 24-05-2013 |
| | | | US | 2013119811 A1 | 16-05-2013 |
| US 2013313936 | A1 | 28-11-2013 | CN | 103427521 A | 04-12-2013 |
| | | | EP | 2667483 A2 | 27-11-2013 |
| | | | JP | 6007593 B2 | 12-10-2016 |
| | | | JP | 2013247781 A | 09-12-2013 |
| | | | US | 2013313936 A1 | 28-11-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150137629 A